# EUROPÄISCHE PATENTSCHRIFT

(11) **EP 3 530 450 B1**
(45) Veröffentlichungstag und Bekanntmachung des Hinweises auf die Patenterteilung: **29.07.2020**
(21) Anmeldenummer: 18171614.3
(22) Anmeldetag: 09.05.2018
(51) Int. Cl.: B32B 1/08, B32B 7/12, B32B 27/08, B32B 27/30, B32B 27/32, B32B 27/34, F16L 11/00

(54) **MEHRSCHICHTIGE KRAFTFAHRZEUG-ROHRLEITUNG**
MULTILAYER MOTOR VEHICLE PIPELINE
CONDUITE DU VÉHICULE AUTOMOBILE MULTICOUCHE

(30) Priorität: 22.02.2018 EP 18158180
(43) Veröffentlichungstag der Anmeldung: 28.08.2019
(73) Patentinhaber: TI Automotive (Fuldabrück) GmbH, 34277 Fuldabrück (DE)
(72) Erfinder: Zimmer, Werner, 34212 Melsungen/Röhrenfurth (DE); Fahrenholz, Frank, 34128 Kassel (DE); Arnold, Siegfried, 34128 Kassel (DE)
(74) Vertreter: Andrejewski - Honke Patent- und Rechtsanwälte Partnerschaft mbB

(56) Entgegenhaltungen:
- EP-A1- 1 362 890
- EP-A1- 2 772 354
- EP-A1- 3 069 865
- WO-A1-2017/089113
- DE-A1-102013 114 630
- US-A1- 2009 269 532

## Beschreibung

Die Erfindung betrifft eine mehrschichtige Kraftfahrzeug-Rohrleitung zur Durchleitung eines fluiden Mediums, insbesondere zur Durchleitung von Kraftstoffen, wobei die Rohrleitung zumindest fünf Schichten aufweist. Die erfindungsgemäße mehrschichtige Kraftfahrzeug-Rohrleitung wird insbesondere als Kraftstoff-Rohrleitung in Fahrzeugen bzw. Kraftfahrzeugen eingesetzt. Grundsätzlich kann die Kraftfahrzeug-Rohrleitung auch als Entlüftungsleitung in Tankentlüftungssystemen eingesetzt werden. Bei dieser Verwendung wird die Rohrleitung insbesondere mit Kraftstoffdämpfen und ihren Kondensaten beaufschlagt. Prinzipiell kann die erfindungsgemäße Kraftfahrzeug-Rohrleitung auch für andere Zwecke verwendet werden, beispielsweise als Leitung für Kühl- und Temperiermedien.

Mehrschichtige Kraftfahrzeug-Rohrleitungen der eingangs genannten Art sind aus der Praxis in verschiedenen Ausführungsformen bekannt. Viele dieser bekannten Rohrleitungen weisen den Nachteil auf, dass sie beim Durchleiten von Kraftstoffen unerwünschten Auswaschungen von Rohrleitungskomponenten ausgesetzt sind. Das betrifft vor allem die in Kontakt mit dem Kraftstoff stehende Innenschicht, aber auch die angrenzenden mittleren Schichten. Bei vielen bekannten Kraftfahrzeug-Rohrleitungen werden aus den Schichten Oligomere und dergleichen Stoffbestandteile von dem Kraftstoff ausgewaschen und diese Substanzen schlagen sich dann in nachteilhafter Weise im Kraftstoffsystem nieder. Daraus können Probleme -beispielsweise an Düsen und ähnlichen Komponenten - resultieren. Aus diesen Gründen lassen viele bekannte Rohrleitungen im Hinblick auf ihre Resistenz gegenüber den Kraftstoffen zu wünschen übrig. Als Folge genügen auch die Barriereeigenschaften dieser Rohrleitungen oftmals nicht den Anforderungen. In der Vergangenheit wurde versucht, dieses Problem durch unterschiedliche Variierung der Schichten - insbesondere der Innenschichten - zu lösen. Dabei haben Verbesserungen in Bezug auf unerwünschte Auswaschungen aber zu anderen Nachteilen geführt, nämlich zu einer verringerten mechanischen Widerstandsfähigkeit und/oder einer verringerten thermischen Resistenz und/oder einer verringerten Resistenz gegenüber äußeren korrosiven Einflüssen. Verschiedene Rohrleitungen, die zur Lösung des genannten Problems eingesetzt wurden, sind aufgrund ihrer Materialauswahl auch verhältnismäßig kostspielig. Insoweit besteht Verbesserungsbedarf.

Aus EP 2 772 354 A1 ist eine mehrschichtige Kraftfahrzeug-Rohrleitung mit zumindest fünf Schichten bekannt. Es soll eine Rohrleitung angegeben werden, die ausreichend resistent gegenüber chemischen Beanspruchungen durch in den Kraftstoffen enthaltene Komponenten ist und die sich insbesondere durch eine geringere Permeabilität für in den Kraftstoff enthaltene Alkohole auszeichnet. Sowohl für die Außenschicht als auch für die Innenschicht dieser Rohrleitung wird eine Mehrzahl von Materialmöglichkeiten angegeben. Die Rohrleitung weist zwingend eine erste Trägerschicht aus Polyamid sowie eine zweite Trägerschicht aus Polyamid auf. Diese Rohrleitungen haben sich grundsätzlich bewährt.

In DE 10 2013 114 630 A1 wird ein Auskleidungselement zur Sanierung einer Rohrleitung beschrieben. Dabei geht es um Rohrleitungen im Bereich der Kanalisation und im Bereich von Gebäuden. Es geht hier darum, ein Auskleidungselement bereitzustellen, das beim Inversieren, Andrücken und/oder Aushärten eine verbesserte Maßbeständigkeit in Rohrlängsrichtung aufweist. US 2009/269532 A1 offenbart eine mehrschichtige Kraftfahrzeug-Rohrleitung.

Schließlich ist aus WO 2017/089113 A1 eine Tank-Innenrohrleitung bekannt, die in Kraftstofftanks von Kraftfahrzeugen eingesetzt wird. Die Rohrleitung weist eine Rohrwandung aus zumindest drei Schichten auf, wobei eine Außenschicht auf Basis eines aromatischen Polyamids, eine Zwischenschicht auf Basis von Polyamid und eine Innenschicht auf Basis eines aromatischen Polyamids vorgesehen ist. Zwischengeschaltete Haftvermittlerschichten sind möglich.
Der Erfindung liegt das technische Problem zugrunde, eine mehrschichtige Kraftfahrzeug-Rohrleitung der eingangs genannten Art anzugeben, bei der die eingangs beschriebenen Nachteile effektiv vermieden werden können und die vor allem eine hohe Resistenz gegenüber Auswaschungen und zusätzlich eine ausreichende mechanische Widerstandsfähigkeit sowie eine optimale thermische Resistenz aufweist. Außerdem soll die mehrschichtige Kraftfahrzeug-Rohrleitung auch gegenüber äußeren korrosiven Einflüssen bzw. gegenüber korrosiven Medien - beispielsweise gegenüber Metallchloriden - ausreichend resistent sein.

Zur Lösung des technischen Problems lehrt die Erfindung eine mehrschichtige Kraftfahrzeug-Rohrleitung zur Durchleitung eines fluiden Mediums, insbesondere zur Durchleitung von Kraftstoffen, wobei die Rohrleitung zumindest fünf Schichten aufweist und zwar mit folgendem Schichtaufbau von außen nach innen:
- eine Außenschicht aus zumindest einem Polyamid,
- eine erste Haftvermittlerschicht,
- eine Sperrschicht mit Barriereeigenschaften gegenüber zumindest einer Komponente des fluiden Mediums,
- eine zweite Haftvermittlerschicht,
- eine Innenschicht aus zumindest einem thermoplastischen Polyurethan (TPU) und/oder aus zumindest einem teilaromatischen Polyamid (PPA),
wobei die Gesamtschichtdicke der Rohrleitung 0,7 bis 3 mm, vorzugsweise 0,7 bis 2,5 mm, bevorzugt 0,8 bis 2 mm und insbesondere 0,85 bis 1,8 mm beträgt,
wobei die Dicke der ersten Haftvermittlerschicht und die Dicke der zweiten Haftvermittlerschicht geringer ist als die Dicke der Sperrschicht wobei die Dicke der zweiten Haftvermittlerschicht 3 bis 20% der Gesamtdicke beträgt,
und wobei die Sperrschicht eine Sperrschicht auf Basis zumindest einer Komponente aus der Gruppe "EVOH, Fluorpolymer" ist.

Es liegt im Rahmen der Erfindung, dass eine Außenschicht aus zumindest einem Polyamid vorgesehen ist. Außenschicht aus zumindest einem Polyamid meint im Rahmen der Erfindung, dass die Außenschicht aus zumindest einem Polyamid besteht bzw. im Wesentlichen aus zumindest einem Polyamid besteht. Eine besonders bevorzugte Ausführungsform der Erfindung ist dadurch gekennezeichnet, dass die Außenschicht aus Polyamid 12 und/oder aus Polyamid 6.12 bzw. im Wesentlichen aus Polyamid 12 und/oder aus Polyamid 6.12 besteht. Es empfiehlt sich, dass die Dicke der Außenschicht 5 bis 50 %, vorzugsweise 5 bis 45 % und insbesondere 7 bis 40 % der Gesamtschichtdicke der Rohrleitung beträgt. Empfohlenermaßen beläuft sich die maximale Dicke der Außenschicht auf 0,4 mm. Zweckmäßigerweise liegt die Dicke der Außenschicht zwischen 0,1 und 0,4 mm, bevorzugt zwischen 0,2 und 0,4 mm.

Erfindungsgemäß ist zwischen der Außenschicht und der Sperrschicht zumindest eine erste Haftvermittlerschicht vorgesehen. Gemäß einer bewährten Ausführungsform ist zwischen Außenschicht und Sperrschicht lediglich die erste Haftvermittlerschicht angeordnet und dabei ist die erste Haftvermittlerschicht unmittelbar mit der Außenschicht einerseits und unmittelbar mit der Sperrschicht andererseits verbunden. Zweckmäßigerweise wird eine Haftvermittlerschicht auf Basis zumindest eines Polyamids und/oder auf Basis zumindest eines Polyolefins verwendet. Falls eine Haftvermittlerschicht auf Basis von Polyamid eingesetzt wird, handelt es sich empfohlenermaßen um ein modifiziertes Polyamid und zwar bevorzugt um ein modifiziertes Polyamid auf Basis von Polyamid 6.12. Bei dem Einsatz einer ersten Haftvermittlerschicht auf Basis eines Polyolefins wird empfohlenermaßen eine Haftvermittlerschicht auf Basis von Polypropylen eingesetzt. Bei dem Polypropylen handelt es sich zweckmäßigerweise um ein modifiziertes Polypropylen, das beispielsweise mit einem Carbonsäurederivat modifiziert ist. - Es liegt im Rahmen der Erfindung, dass die Dicke der ersten Haftvermittlerschicht 3 bis 30 %, vorzugsweise 5 bis 20 % und bevorzugt 5 bis 15 % der Gesamtschichtdicke der Rohrleitung beträgt. Die Dicke der ersten Haftvermittlerschicht beträgt zweckmäßigerweise 0,03 bis 0,15 mm und insbesondere 0,03 bis 0,1 mm.

Erfindungsgemäß ist die Sperrschicht eine Sperrschicht auf Basis zumindest einer Komponente aus der Gruppe "EVOH, Fluorpolymer" ist. EVOH meint dabei Ethylen-Vinylalkohol-Copolymer. Nach einer ersten Ausführungsform besteht die Sperrschicht aus EVOH bzw. im Wesentlichen aus EVOH. Gemäß einer zweiten Ausführungsform besteht die Sperrschicht aus zumindest einem Fluorpolymer bzw. im Wesentlichen aus zumindest einem Fluorpolymer. Besonders bevorzugt besteht dabei die Sperrschicht aus lediglich einem Fluorpolymer bzw. im Wesentlichen aus lediglich einem Fluorpolymer. Vorzugsweise beträgt die Dicke der Sperrschicht 5 bis 50 %, bevorzugt 10 bis 40 % und insbesondere 10 bis 35 % der Gesamtschichtdicke der erfindungsgemäßen Rohrleitung. Es liegt im Rahmen der Erfindung, dass die Sperrschicht Barriereeigenschaften gegenüber zumindest einer Komponente eines durch die Rohrleitung geleiteten Kraftstoffes aufweist.

Erfindungsgemäß ist zwischen der Sperrschicht und der Innenschicht der erfindungsgemäßen Rohrleitung zumindest eine zweite Haftvermittlerschicht und nach einer Ausführungsform lediglich eine zweite Haftvermittlerschicht angeordnet. Zweckmäßigerweise ist die zweite Haftvermittlerschicht eine Haftvermittlerschicht auf Basis zumindest eines Polyamids und/oder auf Basis zumindest eines Polyolefins. Wenn eine zweite Haftvermittlerschicht auf Basis zumindest eines Polyamids verwendet wird, handelt es sich empfohlenermaßen um eine Haftvermittlerschicht auf Basis von Polyamid 6.12. Zweckmäßigerweise wird für die zweite Haftvermittlerschicht ein modifiziertes Polyamid und insbesondere ein modifiziertes Polyamid auf Basis von Polyamid 6.12 verwendet. Falls es sich um eine Haftvermittlerschicht auf Basis zumindest eines Polyolefins handelt, wird vorzugsweise eine Haftvermittlerschicht auf Basis von Polypropylen eingesetzt und insbesondere auf Basis eines modifizierten Polypropylens. Das Polypropylen wird dabei beispielsweise mit einem Carbonsäurederivat modifiziert. Die Dicke der zweiten Haftvermittlerschicht beträgt 3 bis 20 %, vorzugsweise 5 bis 20 % und insbesondere 5 bis 15 % der Gesamtschichtdicke der Rohrleitung. Die Dicke der zweiten Haftvermittlerschicht beträgt vorzugsweise 0,03 bis 0,15 mm und insbesondere 0,03 bis 0,1 mm.

Es liegt im Rahmen der Erfindung, dass eine Innenschicht aus zumindest einem thermoplastischen Polyurethan (TPU) und/oder aus zumindest einem teilaromatischen Polyamid (PPA) eingesetzt wird. Es liegt dabei weiterhin im Rahmen der Erfindung, dass die Innenschicht aus zumindest einem thermoplastischen Polyurethan (TPU) besteht oder im Wesentlichen aus zumindest einem thermoplastischen Polyurethan (TPU) besteht und/oder aus zumindest einem teilaromatischen Polyamid (PPA) besteht bzw. im Wesentlichen aus zumindest einem teilaromatischen Polyamid (PPA) besteht. Nach einer Ausführungsform besteht die Innenschicht lediglich aus einem thermoplastischen Polyurethan (TPU) bzw. im Wesentlichen aus lediglich einem thermoplastischen Polyurethan (TPU). - Zweckmäßigerweise beträgt die Dicke der Innenschicht 5 bis 50 %, vorzugsweise 5 bis 45 % und bevorzugt 7 bis 40 % der Gesamtschichtdicke der Rohrleitung. Empfohlenermaßen beträgt die Dicke der Innenschicht 0,05 bis 0,45 mm, vorzugsweise 0,05 bis 0,4 mm und insbesondere 0,1 bis 0,35 mm. Gemäß einer Ausführungsform der Erfindung ist die Innenschicht der Rohrleitung mit Leitfähigkeitszusätzen versehen. Es liegt im Rahmen der Erfindung, dass die Innenschicht die innerste Schicht der Rohrleitung ist und somit mit dem durch die Rohrleitung strömenden Medium bzw. mit dem durch die Rohrleitung strömenden Kraftstoff in Kontakt steht.

Eine zweckmäßige Ausführungsform der Erfindung ist dadurch gekennzeichnet, dass die Dicke der ersten Haftvermittlerschicht und/oder die Dicke der zweiten Haftvermittlerschicht geringer ist als die Dicke der Außenschicht. Die Dicke der ersten Haftvermittlerschicht und die Dicke der zweiten Haftvermittlerschicht sind geringer ist als die Dicke der Sperrschicht. Vorzugsweise ist die Dicke der ersten Haftvermittlerschicht und/oder die Dicke der zweiten Haftvermittlerschicht geringer als die Dicke der Innenschicht.

Gemäß einer bewährten Ausführungsform der Erfindung ist die Dicke der Außenschicht größer als die Dicke der Sperrschicht und/oder größer als die Dicke der Innenschicht. - Eine Ausführungsform der Erfindung ist dadurch gekennzeichnet, dass die erfindungsgemäße Rohrleitung lediglich aus den fünf beschriebenen Schichten (Außenschicht, erste Haftvermittlerschicht, Sperrschicht, zweite Haftvermittlerschicht, Innenschicht) besteht. Grundsätzlich können aber auch weitere Schichten vorgesehen sein. So kann beispielsweise eine weitere Haftvermittlerschicht eingesetzt werden und/oder eine weitere Sperrschicht. Prinzipiell kann auf der Außenschicht auch noch zumindest eine zusätzliche Deckschicht angeordnet sein und/oder die Außenschicht wird von einem Hüllrohr umgeben.

Empfohlenermaßen wird die erfindungsgemäße Kraftfahrzeug-Rohrleitung - vorzugsweise Kraftstoff-Rohrleitung - durch Extrusion bzw. Koextrusion der Schichten hergestellt. Die erfindungsgemäßen Schichtkomponenten machen eine einfache und wenig aufwendige Koextrusion möglich. Die Koextrusion der Schichten der erfindungsgemäßen Rohrleitung ist vor allem bei moderaten Temperaturen realisierbar.- Bezüglich der geometrischen Gestaltung der erfindungsgemäßen Rohrleitung sind verschiedene Varianten möglich. So ist die erfindungsgemäße Rohrleitung als glattes unprofiliertes Rohr herstellbar oder auch als Wellrohr erzeugbar.

Nachfolgend wird die Erfindung anhand von Ausführungsbeispielen näher erläutert:
Gemäß einem ersten Ausführungsbeispiel besteht die Außenschicht der erfindungsgemäßen Rohrleitung aus Polyamid 12 bzw. im Wesentlichen aus Polyamid 12. Zweckmäßigerweise hat die Außenschicht eine Dicke von 0,15 bis 0,35 mm. - Es liegt im Rahmen der Erfindung, dass innenseitig an die Außenschicht eine erste Haftvermittlerschicht anschließt, die bevorzugt aus einem modifizierten Polyamid, insbesondere aus einem modifizierten Polyamid 6.12 besteht bzw. im Wesentlichen besteht. Zweckmäßigerweise hat diese erste Haftvermitterschicht eine Dicke von 0,03 bis 0,1 mm. - Weiterhin liegt es im Rahmen der Erfindung, dass an diese erste Haftvermittlerschicht innenseitig eine Sperrschicht anschließt, die nach einer bevorzugten Ausführungsvariante aus EVOH besteht bzw. im Wesentlichen besteht. Die Sperrschicht weist zweckmäßigerweise eine Schichtdicke von 0,2 bis 0,7 mm auf. - Empfohlenermaßen schließt innenseitig an die Sperrschicht, vorzugsweise unmittelbar an die Sperrschicht eine zweite Haftvermittlerschicht an, bei der es sich bevorzugt und im Ausführungsbeispiel um eine zweite Haftvermittlerschicht auf Basis von Polypropylen handelt. Zweckmäßigerweise handelt es sich um ein modifziertes Polypropylen und insbesondere um ein mit einem Carbonsäurederivat modifizierten Polypropylen. Die zweite Haftvermittlerschicht hat bevorzugt eine Dicke von 0,03 bis 0,1 mm. - Nach bewährter Ausführungsform der Erfindung schließt innenseitig an die zweite Haftvermittlerschicht bzw. unmittelbar innenseitig an die zweite Haftvermittlerschicht eine Innenschicht an, wobei die Innenschicht bevorzugt und in diesem Ausführungsbeispiel aus zumindest einem thermoplastischen Polyurethan (TPU) besteht bzw. im Wesentlichen besteht. Zweckmäßigerweise beträgt die Schichtdicke der Innenschicht 0,05 bis 0,4 mm. - Es empfiehlt sich, dass die Gesamtschichtdicke der Rohrleitung 0,7 bis 2,5 mm beträgt.

Gemäß einem zweiten Ausführungsbeispiel der Erfindung besteht die Außenschicht aus Polyamid 6.12 bzw. im Wesentlichen aus Polyamid 6.12 Es empfiehlt sich, dass die Außenschicht eine Dicke von 0,15 bis 0,35 mm aufweist. - Zweckmäßigerweise schließt innenseitig an die Außenschicht unmitttelbar eine erste Haftvermittlerschicht an, die bevorzugt und im Ausführungsbeispiel eine erste Haftvermittlerschicht auf Basis eines Polyamids und insbesondere auf Basis von Polyamid 6.12 ist. Es handelt sich dabei vorzugsweise um ein modifiziertes Polyamid bzw. ein modifiziertes Polyamid 6.12. Es empfiehlt sich, dass die erste Haftvermittlerschicht eine Dicke von 0,03 bis 0,1 mm aufweist. - Bevorzugt und im zweiten Ausführungsbeispiel schließt innenseitig an die erste Haftvermittlerschicht unmittelbar die Sperrschicht an, die empfohlenermaßen und im zweiten Ausführungsbeispiel aus einem Fluorpolymer bzw. im Wesentlichen aus einem Fluorpolymer besteht. Zweckmäßigerweise weist die Sperrschicht eine Schichtdicke von 0,05 bis 0,3 mm auf. - Empfohlenermaßen schließt an die Sperrschicht innenseitig und zwar bevorzugt unmittelbar innenseitig die zweite Haftvermittlerschicht an, die im zweiten Ausführungsbeispiel auf Basis zumindest eines Polyamids und zwar bevorzugt auf Basis von Polyamid 6.12 ausgebildet ist. Es hat sich bewährt, dass die zweite Haftvermittlerschicht eine Schichtdicke von 0,03 bis 0,1 mm aufweist. - Zweckmäßigerweise schließt innenseitig an die zweite Haftvermittlerschicht und zwar bevorzugt unmittelbar innenseitig an die zweite Haftvermittlerschicht eine Innenschicht an, die vorzugsweise und im zweiten Ausführungsbeispiel aus zumindest einem teilaromatischen Polyamid (PPA) besteht bzw. im Wesentlichen besteht. Bevorzugt besteht die Innenschicht lediglich aus einem teilaromatischen Polyamid (PPA) bzw. im Wesentlichen aus lediglich einem teilaromatischen Polyamid (PPA). Es liegt im Rahmen der Erfindung, dass die Schichtdicke der Innenschicht 0,05 bis 0,4 mm beträgt.-Zweckmäßigerweise liegt die Gesamtschichtdicke der Rohrleitung bei dem zweiten Ausführungsbeispiel ebenfalls im Bereich zwischen 0,7 und 2,5 mm.

Der Erfindung liegt die Erkenntnis zugrunde, dass die erfindungsgemäße Kraftfahrzeug-Rohrleitung eine überraschend hohe Resistenz gegenüber Auswaschungen von Schichtkomponenten aufweist. Das gilt insbesondere für die Innenschicht der erfindungsgemäßen Rohrleitung, jedoch auch für die daran angrenzenden Rohrschichten. Problemlos kann bei der erfindungsgemäßen Rohrleitung ein Auswaschungsgrad von kleiner 6 g/m² eingehalten werden und überraschenderweise ist der erfindungsgemäß erzielte Auswaschungsgrad deutlich kleiner als der genannte Wert. Die Einhaltung des vorgenannten Wertes für den Auswaschungsgrad wird von manchen Automobilherstellern gefordert. Hervorzuheben ist auch, dass die erfindungsgemäße Kraftfahrzeug-Rohrleitung problemlos für verschiedene Kraftstoffsorten eingesetzt werden kann und im Wesentlichen bei all diesen Kraftstoffsorten die gleichen positiven Resultate zeigt. Im Gegensatz zu vielen aus dem Stand der Technik bekannten Rohrleitungen weist die erfindungsgemäße Rohrleitung zusätzlich zu der hervorragenden Auswaschungsbeständigkeit auch eine optimale mechanische Widerstandsfähigkeit auf wie auch eine vorteilhafte Resistenz gegenüber hohen und tiefen Temperaturen. Die erfindungsgemäße Rohrleitung ist problemlos beständig im Temperaturbereich zwischen - 40°C und + 140°C. Zu betonen ist weiterhin, dass im Hinblick auf diese erheblichen Vorteile die erfindungsgemäße Rohrleitung nichtsdestoweniger aus relativ kostengünstigen Materialien herstellbar ist. Ein weiterer hervorzuhebender Vorteil besteht darin, dass die erfindungsgemäße Rohrleitung einfach koextrudiert werden kann und vor allem bei moderaten Temperaturen koextrudiert werden kann. Die gesamte erfindungsgemäße Rohrleitung ist gegenüber äußeren chemischen Einflüssen bzw. korrosiven Einflüssen -beispielsweise aufgrund von Metallchloriden und dergleichen - außergewöhnlich resistent. Insoweit vereint die erfindungsgemäße Kraftfahrzeug-Rohrleitung eine Mehrzahl von Vorteilen.

Nachfolgend wird die Erfindung anhand einer lediglich ein Ausführungsbeispiel darstellenden Zeichnung näher erläutert. Es zeigen in schematischer Darstellung:

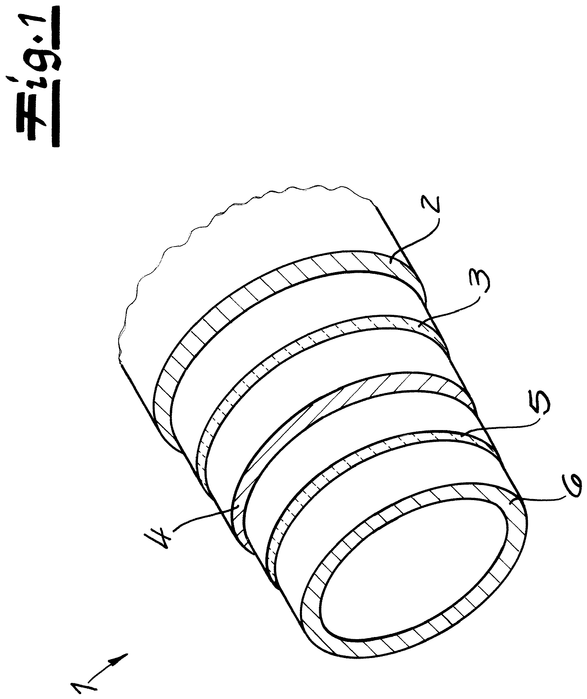

- **Fig. 1**: eine perspektivische Ansicht einer erfindungsgemäßen Rohrleitung und

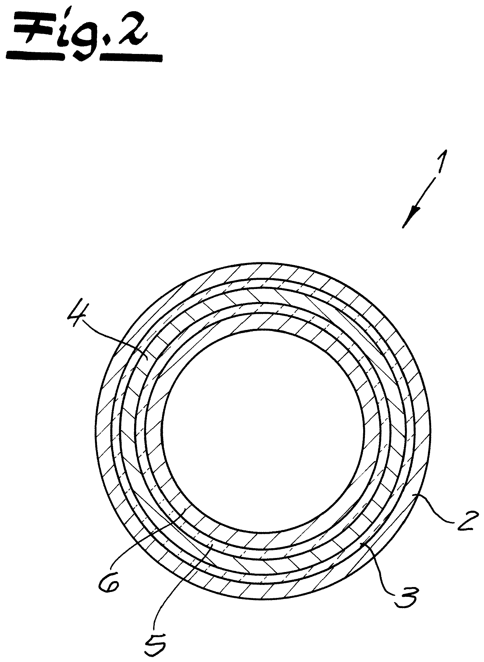

- **Fig. 2**: einen Schnitt durch den Gegenstand nach Fig. 1.

Die Figuren zeigen eine erfindungsgemäße mehrschichtige Kraftfahrzeug-Rohrleitung (1), wobei es sich im Ausführungsbeispiel um eine Kraftstoff-Rohrleitung zur Durchleitung von Kraftstoffen handelt. Die Rohrleitung 1 weist eine Außenschicht 2 auf, die im Ausführungsbeispiel aus Polyamid 12 bzw. im Wesentlichen aus Polyamid 12 besteht. Diese Außenschicht 2 mag eine Schichtdicke zwischen 0,2 und 0,4 mm aufweisen. Zweckmäßigerweise und im Ausführungsbeispiel schließt innenseitig an die Außenschicht 2 eine erste Haftvermittlerschicht 3 an, die bevorzugt und im Ausführungsbeispiel eine Haftvermittlerschicht 3 auf Basis eines modifizierten Polyamids 6.12 ist. Die Schichtdicke der ersten Haftvermittlerschicht 3 mag im Ausführungsbeispiel 0,03 bis 0,1 mm betragen.

Es liegt im Rahmen der Erfindung, dass an die erste Haftvermittlerschicht 3 innenseitig unmittelbar eine Sperrschicht 4 anschließt, die im Ausführungsbeispiel aus EVOH besteht bzw. im Wesentlichen besteht. Die Dicke der Sperrschicht 4 beträgt zweckmäßigerweise 0,1 bis 0,3 mm. Bewährtermaßen und im Ausführungsbeispiel schließt an die Sperrschicht 4 innenseitig unmittelbar eine zweite Haftvermittlerschicht 5 an, die bevorzugt und im Ausführungsbeispiel eine Haftvermittlerschicht 5 auf Basis von Polyamid 6.12 ist. Empfohlenermaßen beträgt die Schichtdicke der zweiten Haftvermittlerschicht 5 0,03 bis 0,1 mm.

Gemäß bevorzugter Ausführungsform und im Ausführungsbeispiel nach den Figuren schließt an die zweite Haftvermittlerschicht 5 innenseitig unmittelbar die Innenschicht 6 an, die gemäß einer Ausführungsvariante und im Ausführungsbeispiel aus einem thermoplastischen Polyurethan (TPU) besteht bzw. im Wesentlichen besteht. Die Schichtdicke der Innenschicht 6 mag im Ausführungsbeispiel 0,1 bis 0,4 mm betragen. Es liegt im Rahmen der Erfindung, dass die Innenschicht 6 mit Leitfähigkeitszusätzen versehen werden kann. - Zweckmäßigerweise beträgt die Gesamtschichtdicke der Rohrleitung 0,7 bis 3 mm, vorzugsweise 0,7 bis 2,5 mm.

## Patentansprüche

1. Mehrschichtige Kraftfahrzeug-Rohrleitung (1) zur Durchleitung zumindest eines fluiden Mediums, insbesondere zur Durchleitung von Kraftstoffen, wobei die Rohrleitung (1) zumindest fünf Schichten aufweist und zwar mit folgendem Schichtaufbau von außen nach innen:
- eine Außenschicht (2) aus zumindest einem Polyamid bzw. im Wesentlichen aus zumindest einem Polyamid,
- eine erste Haftvermittlerschicht (3),
- eine Sperrschicht (4) mit Barriereeigenschaften gegenüber zumindest einer Komponente des fluiden Mediums,
- eine zweite Haftvermittlerschicht (5),
- eine Innenschicht (6) aus zumindest einem thermoplastischen Polyurethan (TPU) und/oder zumindest einem teilaromatischen Polyamid (PPA) bzw. im Wesentlichen aus zumindest einem TPU und/oder PPA,
wobei die Gesamtschichtdicke der Rohrleitung (1) 0,7 bis 3 mm, vorzugsweise 0,7 bis 2,5 mm und bevorzugt 0,8 bis 2 mm beträgt,
wobei die Dicke der ersten Haftvermittlerschicht (3) und die Dicke der zweiten Haftvermittlerschicht (5) geringer ist als die Dicke der Sperrschicht (4)
wobei die Dicke der zweiten Haftvermittlerschicht (5) 3 bis 20 % der Gesamtschichtdicke beträgt
und wobei die Sperrschicht (4) eine Sperrschicht (4) auf Basis zumindest einer Komponente aus der Gruppe "EVOH, Fluorpolymer" ist.

2. Mehrschichtige Kraftfahrzeug-Rohrleitung nach Anspruch 1, wobei die Außenschicht (2) aus Polyamid 12 und/oder aus Polyamid 6.12 bzw. im Wesentlichen aus Polyamid 12 und/oder aus Polyamid 6.12 besteht.

3. Mehrschichtige Kraftfahrzeug-Rohrleitung nach einem der Ansprüche 1 oder 2, wobei die Dicke der Außenschicht (2) 5 bis 50 %, insbesondere 5 bis 45 % und bevorzugt 7 bis 40 % der Gesamtschichtdicke der Rohrleitung (1) beträgt.

4. Mehrschichtige Kraftfahrzeug-Rohrleitung nach einem der Ansprüche 1 bis 3, wobei die erste Haftvermittlerschicht (3) eine Haftvermittlerschicht (3) auf Basis zumindest eines Polyamids und/oder auf Basis zumindest eines Polyolefins ist.

5. Mehrschichtige Kraftfahrzeug-Rohrleitung nach einem der Ansprüche 1 bis 4, wobei die erste Haftvermittlerschicht (3) eine Haftvermittlerschicht (3) auf Basis von Polyamid 6.12 und/oder auf Basis von Polypropylen ist.

6. Mehrschichtige Kraftfahrzeug-Rohrleitung nach einem der Ansprüche 1 bis 5, wobei die Dicke der ersten Haftvermittlerschicht (3) 3 bis 30 %, bevorzugt 5 bis 20 % der Gesamtschichtdicke der Rohrleitung (1) beträgt.

7. Mehrschichtige Kraftfahrzeug-Rohrleitung nach einem der Ansprüche 1 bis 6, wobei die Dicke der Sperrschicht (4) 5 bis 50 %, bevorzugt 10 bis 40 % und insbesondere 10 bis 35 % der Gesamtschichtdicke der Rohrleitung (1) beträgt.

8. Mehrschichtige Kraftfahrzeug-Rohrleitung nach einem der Ansprüche 1 bis 7, wobei die zweite Haftvermittlerschicht (5) eine Haftvermittlerschicht (5) auf Basis zumindest eines Polyamids und/oder auf Basis zumindest eines Polyolefins ist.

9. Mehrschichtige Kraftfahrzeug-Rohrleitung nach einem der Ansprüche 1 bis 8, wobei die zweite Haftvermittlerschicht (5) eine Haftvermittlerschicht (5) auf Basis von Polyamid 6.12 und/oder auf Basis von Polypropylen ist.

10. Mehrschichtige Kraftfahrzeug-Rohrleitung nach einem der Ansprüche 1 bis 9, wobei die Dicke der Innenschicht (6) 5 bis 50 %, vorzugsweise 5 bis 45 % und bevorzugt 7 bis 40 % der Gesamtschichtdicke der Rohrleitung (1) beträgt.

11. Mehrschichtige Kraftfahrzeug-Rohrleitung nach einem der Ansprüche 1 bis 10, wobei die Innenschicht (6) mit Leitfähigkeitszusätzen versehen ist.

12. Mehrschichtige Kraftfahrzeug-Rohrleitung nach einem der Ansprüche 1 bis 11, wobei die Rohrleitung (1) durch Koextrusion hergestellt ist.

## Claims

1. A multilayer motor vehicle pipe (1) for conducting at least one fluid medium, in particular for conducting fuels, wherein the pipe (1) has at least five layers, specifically with the following layer construction from the outside in:
- an outer layer (2) comprised of at least one polyamide or essentially of at least one polyamide,
- a first adhesion promoting layer (3),
- a barrier layer (4) with barrier properties relative to at least one component of the fluid medium,
- a second adhesion promoting layer (5),
- an inner layer (6) comprised of at least one thermoplastic polyurethane (TPU) and/or at least one partially aromatic polyamide (PPA) or essentially of at least one TPU and/or PPA,
wherein the overall layer thickness of the pipe (1) measures 0.7 to 3 mm, primarily 0.7 to 2.5 mm, and preferably 0.8 to 2 mm,
wherein the thickness of the first adhesion promoting layer (3) and the thickness of the second adhesion promoting layer (5) is less than the thickness of the barrier layer (4),
wherein the thickness of the second adhesion promoting layer (5) measures 3 to 20 % of the overall layer thickness,
and wherein the barrier layer (4) is a barrier layer (4) based on at least one component from the "EVOH, fluoropolymer" group.

2. The multilayer motor vehicle pipe according to claim 1, wherein the outer layer (2) consists of polyamide 12 and/or polyamide 6.12 or essentially of polyamide 12 and/or polyamide 6.12.

3. The multilayer motor vehicle pipe according to one of claims 1 or 2, wherein the thickness of the outer layer (2) measures 5 to 50 %, in particular 5 to 45 %, and preferably 7 to 40 % of the overall thickness of the pipe (1) .

4. The multilayer motor vehicle pipe according to one of claims 1 to 3, wherein the first adhesion promoting layer (3) is an adhesion promoting layer (3) based on at least one polyamide and/or based on at least one polyolefin.

5. The multilayer motor vehicle pipe according to one of claims 1 to 4, wherein the first adhesion promoting layer (3) is an adhesion promoting layer (3) based on polyamide 6.12 and/or based on polypropylene.

6. The multilayer motor vehicle pipe according to one of claims 1 to 5, wherein the thickness of the first adhesion promoting layer (3) measures 3 to 30 %, preferably 5 to 20 % of the overall layer thickness of the pipe (1).

7. The multilayer motor vehicle pipe according to one of claims 1 to 6, wherein the thickness of the barrier layer (4) measures 5 to 50 %, preferably 10 to 40 %, and in particular 10 to 35 % of the overall layer thickness of the pipe (1).

8. The multilayer motor vehicle pipe according to one of claims 1 to 7, wherein the second adhesion promoting layer (5) is an adhesion promoting layer (5) based on at least one polyamide and/or based on at least one polyolefin.

9. The multilayer motor vehicle pipe according to one of claims 1 to 8, wherein the second adhesion promoting layer (5) is an adhesion promoting layer (5) based on polyamide 6.12 and/or based on polypropylene.

10. The multilayer motor vehicle pipe according to one of claims 1 to 9, wherein the thickness of the inner layer (6) measures 5 to 50 %, primarily 5 to 45 %, and preferably 7 to 40 % of the overall layer thickness of the pipe (1).

11. The multilayer motor vehicle pipe according to one of claims 1 to 10, wherein the inner layer (6) is provided with conductive additives.

12. The multilayer motor vehicle pipe according to one of claims 1 to 11, wherein the pipe (1) is manufactured through coextrusion.

## Revendications

1. Conduite de véhicule automobile multicouches (1) pour faire passer au moins un milieu fluide, en particulier pour faire passer des carburants, sachant que la conduite (1) comporte au moins cinq couches et à savoir avec la structure de couches suivante de l'extérieur vers l'intérieur :
- une couche extérieure (2) d'au moins un polyamide ou pour l'essentiel d'au moins un polyamide,
- une première couche d'agent adhésif (3),
- une couche de protection (4) avec des propriétés de barrière vis-à-vis d'au moins un composant du milieu fluide,
- une deuxième couche d'agent adhésif (5),
- une couche intérieure (6) d'au moins un polyuréthane thermoplastique (PUT) et/ou d'au moins un polyamide partiellement aromatique (PAPA) ou pour l'essentiel d'au moins un PUT et/ou PAPA,
sachant que l'épaisseur de couche totale de la conduite (1) est de 0,7 mm à 3 mm, de préférence de 0,7 à 2,5 mm et de préférence de 0,8 à 2 mm,
sachant que l'épaisseur de la première couche d'agent adhésif (3) et l'épaisseur de la deuxième couche d'agent adhésif (5) est plus faible que l'épaisseur de la couche de protection (4),
sachant que l'épaisseur de la deuxième couche d'agent adhésif (5) représente 3 à 20 % de l'épaisseur de couche totale,
et sachant que la couche de protection (4) est une couche de protection (4) sur la base d'au moins un composant du groupe « copolymère d'éthylène-alcool vinylique (CEAV), fluoropolymère ».

2. Conduite de véhicule automobile multicouches selon la revendication 1, sachant que la couche extérieure (2) est composée de polyamide 12 et/ou de polyamide 6.12 ou pour l'essentiel de polyamide 12 et/ou de polyamide 6.12.

3. Conduite de véhicule automobile multicouches selon l'une quelconque des revendications 1 ou 2, sachant que l'épaisseur de la couche extérieure (2) représente 5 à 50 %, en particulier 5 à 45 % et de préférence 7 à 40 % de l'épaisseur de couche totale de la conduite (1).

4. Conduite de véhicule automobile multicouches selon l'une quelconque des revendications 1 à 3, sachant que la première couche d'agent adhésif (3) est une couche d'agent adhésif (3) à base au moins d'un polyamide et/ou à base au moins d'une polyoléfine.

5. Conduite de véhicule automobile multicouches selon l'une quelconque des revendications 1 à 4, sachant que la première couche d'agent adhésif (3) est une couche d'agent adhésif (3) à base de polyamide 6.12 et/ou à base de polypropylène.

6. Conduite de véhicule automobile multicouches selon l'une quelconque des revendications 1 à 5, sachant que l'épaisseur de la première couche d'agent adhésif (3) représente 3 à 30 %, de préférence 5 à 20 % de l'épaisseur de couche totale de la conduite (1).

7. Conduite de véhicule automobile multicouches selon l'une quelconque des revendications 1 à 6, sachant que l'épaisseur de la couche de protection (4) représente 5 à 50 %, de préférence 10 à 40 % et en particulier 10 à 35 % de l'épaisseur de couche totale de la conduite (1) .

8. Conduite de véhicule automobile multicouches selon l'une quelconque des revendications 1 à 7, sachant que la deuxième couche d'agent adhésif (5) est une couche d'agent adhésif (5) sur la base au moins un polyamide et/ou sur la base d'au moins une polyoléfine.

9. Conduite de véhicule automobile multicouches selon l'une quelconque des revendications 1 à 8, sachant que la deuxième couche d'agent adhésif (5) est une couche d'agent adhésif (5) à base de polyamide 6.12 et/ou à base de polypropylène.

10. Conduite de véhicule automobile multicouches selon l'une quelconque des revendications 1 à 9, sachant que l'épaisseur de la couche intérieure (6) représente 5 à 50 %, de préférence 5 à 45 % et de préférence 7 à 40 % de l'épaisseur de couche totale de la conduite (1).

11. Conduite de véhicule automobile multicouches selon l'une quelconque des revendications 1 à 10, sachant que la couche intérieure (6) est dotée d'additifs conducteurs.

12. Conduite de véhicule automobile multicouches selon l'une quelconque des revendications 1 à 11, sachant que la conduite (1) est fabriquée par coextrusion.
